# EUROPÄISCHE PATENTSCHRIFT

(11) **EP 2 997 332 B1**
(45) Veröffentlichungstag und Bekanntmachung des Hinweises auf die Patenterteilung: **16.01.2019**
(21) Anmeldenummer: 14715849.7
(22) Anmeldetag: 05.04.2014
(51) Int. Cl.: G01C 21/34, G05D 1/00, G08G 1/0967, G08G 1/0968, B60W 30/182, B60W 50/08, B60W 50/14, B60W 50/00

(54) **NAVIGATIONSHILFE FÜR EIN KRAFTFAHRZEUG MIT AUTOPILOTEN**
NAVIGATION AID FOR A MOTOR VEHICLE WITH AUTOPILOT
AIDE À LA NAVIGATION DESTINÉE À UN VÉHICULE AUTOMOBILE ÉQUIPÉ D'UN PILOTAGE AUTOMATIQUE

(30) Priorität: 16.05.2013 DE 102013008605
(43) Veröffentlichungstag der Anmeldung: 23.03.2016
(73) Patentinhaber: Audi AG, 85045 Ingolstadt (DE)
(72) Erfinder: GIESLER, Björn, 85055 Ingolstadt (DE); REICHEL, Michael, 85049 Ingolstadt (DE); KLAAS, Sebastian, 85101 Lenting (DE)
(74) Vertreter: Bauer, Dominik Michael
(86) Internationale Anmeldenummer: PCT/EP2014/000918
(87) Internationale Veröffentlichungsnummer: WO 2014/183822

(56) Entgegenhaltungen:
- EP-A2- 1 308 812
- DE-A1- 10 345 559
- DE-A1- 19 821 163
- DE-A1-102009 048 954
- DE-A1-102010 001 579

## Beschreibung

Die Erfindung betrifft eine Navigationshilfe für ein Kraftfahrzeug, das einen Autopiloten aufweist. Bei aktiviertem Autopiloten kann dieser das Kraftfahrzeug ohne ein Zutun eines Fahrers selbsttätig längs- und querführen, also beschleunigen und abbremsen (Längsführung) sowie lenken (Querführung). Das Kraftfahrzeug weist des Weiteren ein Navigationssystem zum Ermitteln einer Fahrroute zu einem vorgegebenen Ziel auf. Zu der Erfindung gehört auch eine Serveranordnung für das Internet, welche ebenfalls ein Navigationssystem für das Kraftfahrzeug aufweist. Schließlich gehört zu der Erfindung noch ein Verfahren zum Betreiben eines Navigationssystems.

Heutiges Fahren eines Kraftfahrzeugs ist davon geprägt, dass der Fahrer selbst am Steuer sitzt und zumindest die Querführung des Kraftfahrzeugs selbst durchführt. Hierzu muss er sich auf den Verkehr konzentrieren. Um dem Fahrer das Navigieren zu einem Ziel zu erleichtern, kann er eine Navigationshilfe, also ein Navigationssystem, nutzen, das ihm eine Fahrroute auf der Grundlage von Navigationsdaten ermittelt, die das Straßensystem oder Verkehrswegenetz beschreiben. Die Fahrroute wird derart gewählt, dass der Fahrer sein Ziel möglichst schnell und eventuell spritsparend erreicht. Zusätzlich zu den Navigationsdaten kann durch das Navigationssystem auch auf der Grundlage aktueller Verkehrsdaten eine Fahrroute herausgesucht werden, die ihn um Regionen herumführt, in denen es einen Stau oder stockenden Verkehr gibt. Verkehrsdaten beschreiben den Verkehrsfluss in dem Verkehrswegenetz, also z.B. eine aktuelle Durchschnittsgeschwindigkeit.

Aus der DE 10 2009 048 954 A1 und der DE 10 2010 038 454 A1 sind Kraftfahrzeuge mit einem Autopiloten bekannt. Durch einen Autopiloten ist es möglich, das Kraftfahrzeug in bestimmten Situationen, beispielsweise in einem Stau oder bei stockendem Verkehr, durch den Autopiloten führen zu lassen, also das Kraftfahrzeug quasi selbst fahren zu lassen. Der Fahrer muss dann das automatisch fahrende Fahrzeug nicht einmal dabei überwachen. Er kann diese Zeit dann nutzen, um beispielsweise E-Mails zu schreiben oder einen Film zu schauen. Die Gelegenheit zum Aktivieren des Autopiloten hat der Fahrer aber nur, wenn es der das Kraftfahrzeug umgebende Straßenverkehr auch zulässt, also eine Aktivierungsbedingung für den Autopiloten erfüllt ist.

Aus der DE 10 2009 019 702 A1 ist zusätzlich bekannt, den Fahrer während einer pilotierten Fahrt zu warnen, wenn durch den Autopiloten erkannt wird, dass das Fahrzeug nicht mehr durch den Autopiloten geführt werden kann, weil eine Aktivierungsbedingung für den Autopiloten nicht mehr erfüllt ist. Grund für den Abbruch einer pilotierten Fahrt, das heißt das Deaktivieren des Autopiloten, kann beispielsweise sein, dass eine zulässige Höchstgeschwindigkeit, bis zu welcher der Autopilot betrieben werden darf, voraussichtlich gleich überschritten wird, wie es beispielsweise bei einem Stauende der Fall sein kann.

In der DE 10 2010 001 579 A1 ist ein Fahrerassistenzsystem für ein Fahrzeug mit einer Einrichtung zur Umgebungserfassung und einer Einrichtung zum Erfassen einer aktuellen Fahrsituation beschrieben. Dabei umfasst das Fahrerassistenzsystem ferner eine Nutzerschnittstelle, eine Einrichtung zum Erfassen einer vorausliegenden Fahr-Strecke und einer Einrichtung zum Abschätzen und Bewerten einer Komplexität einer Fahraufgabe auf der erfassten vorliegenden Fahr-Strecke.

Aus der EP 1 308 812 A2 geht ein automatisches Fahrzeugleitsystem zum Leiten eines Fahrzeugs hervor, das führerlos automatisch in einen automatischen Streckenabschnitt geleitet wird. Dabei umfasst das System eine Steuervorrichtung zum Organisieren des automatischen Streckenabschnitts und zur Steuerung des Fahrzeugs, das in dem automatischen Streckenabschnitt fährt. Zudem ist eine Routendaten-Akquisitionsvorrichtung zur Erlangung von Routendaten vorgesehen, die eine Reiseroute zu dem durch das Fahrzeug zu erreichenden Ziel als Ergebnis einer Routensuche anzeigt.

Aus der DE 103 45 559 A1 geht ein Fahrzeugnavigationssystem hervor, welches eine automatische Fahrstraße priorisiert. Die Straßenkartendaten enthalten Knotendaten, welche einen Abzweigungspunkt, einen Verbindungspunkt, oder einen Kreuzungspunkt anzeigen und Streckenabschnittsdaten, welche eine Straße zwischen den vorausgehenden Punkten anzeigen. Die Knotendaten und Streckenabschnittsdaten enthalten Abstände, Arten der Straße und Kosten, welche auf der Einfachheit des Fahrens basieren. Bei der Routensuche wird eine Route derart gewählt, dass die beim Fahren auf der Route zu einem Ziel enthaltenen Gesamtkosten minimal sind bzw. sein können. Wenn eine Anweisung erfolgt, dass einer automatischen Fahrstraße eine Priorität gegeben wird, werden die Kosten verringert, welche in den Knoten- und Streckenabschnittsdaten enthalten sind, die der automatischen Fahrstraße entsprechen. Es wird dabei eine Route, welche die automatische Fahrstraße enthält bevorzugt gegenüber anderen Routen gewählt.

In der DE 198 21 163 A1 sind ein Fahrer-Assistenzsystem und ein Verfahren zu dessen Betrieb beschrieben. Hierbei sind ein Erfassungsmittel für vorbestimmte, momentane Umgebungsparameter einer augenblicklichen Verkehrssituation, ein Vergleichsmittel zum Vergleichen der erfassten momentanen Umgebungsparameter mit gespeicherten, für das Fahrerassistenzsystem zulässigen Umgebungsparametern sowie ein Aktivierungs-/Deatkivierungsmittel zum Deaktivieren des Fahrer-Assistenzsystems vorgesehen.

Der Erfindung liegt die Aufgabe zugrunde, einem Benutzer eines Kraftfahrzeugs mit Autopiloten den gezielten oder planmäßigen Einsatz des Autopiloten zu ermöglichen.

Die Aufgabe wird durch ein Verfahren gemäß Patentanspruch 1, ein Kraftfahrzeug gemäß Patentanspruch 13 und eine Serveranordnung gemäß Patentanspruch 14 gelöst. Vorteilhafte Weiterbildungen der Erfindung sind durch die Unteransprüche gegeben.

Wie bereits beschrieben, muss zum Einsetzen des Autopiloten eine vorbestimmte Aktivierungsbedingung für den Autopiloten erfüllt sein. Diese ist vom Modell des Autopiloten abhängig. Darf ein bestimmter Autopilot beispielsweise nur bis zu einer Höchstgeschwindigkeit von beispielsweise 6 km/h genutzt werden, muss eine entsprechende Verkehrssituation vorliegen, damit der Fahrer den Autopiloten aktivieren kann. Würde der Fahrer z.B. auf einer freien Autobahn plötzlich seine Fahrgeschwindigkeit auf 6 km/h verringern und den Autopiloten aktivieren, wäre dies lebensgefährlich. Eine andere Aktivierungsbedingung kann sein, dass der Autopilot auf einer Strecke keine Abbiegemanöver fahren kann.

Das erfindungsgemäße Verfahren betrifft das Betreiben eines Navigationssystems für ein Kraftfahrzeug mit Autopiloten. Bei dem Verfahren wird in zunächst an sich bekannter Weise durch das Navigationssystem zu einer Zielvorgabe eines Benutzers auf der Grundlage von Navigationsdaten eine Fahrroute zu dem vorgegebenen Ziel ermittelt. Erfindungsgemäß wird nun zusätzlich durch das Navigationssystem anhand von Verkehrsdaten und auf Grundlage der vorbestimmten Aktivierungsbedingung für den Autopiloten ermittelt, auf welchen Straßen das Aktivieren des Autopiloten voraussichtlich möglich ist. Die Straßen sind natürlich durch die Navigationsdaten beschrieben.

Im Zusammenhang mit einer dynamischen Routenumplanung, also dem Verändern einer der Navigationshilfe zugrunde gelegten Fahrroute während der Fahrt aufgrund eines unvorhergesehenen Fahrhindernisses, ist es erfindungsgemäß vorgesehen, aus mehreren möglichen Alternativen diejenige herauszusuchen, durch die der Fahrer durch pilotiertes Fahren die meiste frei verfügbare Zeit während der Fahrt gewinnt. Dadurch ergibt sich der im Vergleich zum Stand der Technik ungewöhnliche Effekt, dass es für einen Fahrer sinnvoller sein kann, das unvorhergesehene Fahrhindernis, also beispielsweise einen Stau, gerade nicht zu umfahren, sondern gezielt in den Stau hineinzufahren. Hierdurch kann der Fahrer bei aktiviertem Autopiloten die Wartezeit im Stau als Freizeit genießen oder als Arbeitszeit nutzen, während das Umfahren des Hindernisses auf einer anderen Fahrroute vom Fahrer in der Regel das Führen des Kraftfahrzeugs abverlangt.

Man hat festgestellt, dass die pilotierte Fahrt unterschiedliche Qualitäten aufweisen kann. Die Erfindung sieht deshalb vor, durch das Navigationssystem einen durch die Verkehrsdaten beschriebenen Stau auf der ermittelten Fahrroute einem aus mehreren unterschiedlichen Stautypen zuzuordnen und dem Fahrer zu dem Stau eine Empfehlung für eine Nebentätigkeit während einer pilotierten Fahrt in dem Stau zu geben. Stautypen können beispielsweise sein: Stehend, fließend, zähfließend, stockend. Im stockenden Verkehr mit vielen Geschwindigkeitswechseln macht beispielsweise ein Nickerchen weniger Sinn als im stehenden Verkehr.

Durch das erfindungsgemäße Verfahren ergibt sich der Vorteil, dass nun der Fahrer des Kraftfahrzeugs mit dem erfindungsgemäß betriebenen Navigationssystem ein Gerät an die Hand bekommt, das ihm die Informationen ermittelt, wo im Verkehrswegenetz der Fahrer den Autopiloten gezielt nutzen, also aktivieren kann.

Die Erfindung sieht auch ein Kraftfahrzeug vor, welches einen Autopiloten aufweist, der im aktivierten Zustand während einer Fahrt ohne ein Zutun des Fahrers selbsttätig eine Längs- und Querführung des Kraftfahrzeugs durchführt. Des Weiteren weist das erfindungsgemäße Kraftfahrzeug ein Navigationssystem zum Ermitteln einer Fahrroute zu einem Ziel hin auf, welches durch eine Zielvorgabe des Fahrers festgelegt ist. Die Fahrroute wird in bekannter Weise auf der Grundlage von Navigationsdaten ermittelt. Das erfindungsgemäße Kraftfahrzeug ist nun dadurch gekennzeichnet, dass das Navigationssystem dazu ausgelegt ist, eine Ausführungsform des erfindungsgemäßen Verfahrens durchzuführen. Das erfindungsgemäße Kraftfahrzeug ist bevorzugt als Kraftwagen, insbesondere als Personenkraftwagen, ausgestaltet.

Bei dem Navigationssystem muss es sich aber nicht unbedingt um ein Onbord-Gerät des Kraftfahrzeugs selbst handeln. Ein anderer Aspekt der Erfindung betrifft ein fahrzeugexternes Navigationssystem. Hierzu sieht die Erfindung eine Serveranordnung für das Internet vor, welche das Navigationssystem aufweist. Auch bei der erfindungsgemäßen Serveranordnung ist das Navigationssystem dazu ausgelegt, eine Ausführungsform des erfindungsgemäßen Verfahrens durchzuführen. Das Navigationssystem der Serveranordnung ist zusätzlich dazu ausgelegt, die ermittelte Fahrroute an ein Kraftfahrzeug zu übermitteln.

Eine vorteilhafte Weiterbildung des Verfahrens sieht vor, dass die Fahrroute in Abhängigkeit von einer Vorgabe des Fahrers betreffend das Fahren mit aktiviertem Autopiloten ermittelt wird. Mit anderen Worten wird durch das Navigationssystem nicht nur eine Information bereitgestellt, wo der Autopilot voraussichtlich aktiviert werden kann. Vielmehr wird auch die Fahrroute in der Weise aus den Navigationsdaten zusammengestellt, dass ein Fahrerwunsch betreffend das pilotierte Fahren berücksichtigt ist. Beispielsweise kann der Fahrer vorgeben, dass er möglichst häufig pilotiert fahren möchte oder zu einer bestimmten Zeit pilotiert fahren möchte, weil er beispielsweise einen Telefonanruf erwartet.

Eine andere Ausführungsform des Verfahrens sieht vor, zu der ermittelten Fahrroute für einen Benutzer des Navigationssystems eine Einteilung der Fahrroute in pilotierte und nicht-pilotierte Abschnitte auszugeben. Beispielsweise kann die Einteilung grafisch aufbereitet auf einem Bildschirm des Kraftfahrzeugs angezeigt werden. So kann der Fahrer in einer Situation, in welcher er zwar selbst fahren muss, aber auch telefonieren möchte, anhand der ausgegebenen Einteilung schnell erkennen, wann er das Telefonat ungestört fortführen kann. Beispielsweise kann er so seinen Gesprächspartner bitten, in 10 Minuten noch einmal anzurufen, weil der Fahrer dann die Fahrt mit aktiviertem Autopiloten fortsetzen kann.

Selbstverständlich kann bei dem erfindungsgemäßen Verfahren auch vorgesehen sein, dass durch das Navigationssystem mehrere Fahrrouten ermittelt werden und diese dann dem Benutzer zur Auswahl einer gewünschten Fahrroute angezeigt werden. Der Benutzer kann dann die gewünschte Fahrroute auswählen und als die Fahrroute festlegen, die vom Navigationssystem während der Fahrt für die Navigationshilfe zugrunde gelegt wird.

Die Erfindung sieht in einer anderen Ausführungsform vor, dass durch das Navigationssystem aus den Navigationsdaten als die Fahrtroute eine solche Fahrstrecke herausgesucht wird, die bei den gegebenen Verkehrsdaten ein vorgegebenes Optimierungskriterium betreffend die Zeit, die der Fahrer selbst fahren muss, erfüllt. Beispielsweise kann als Optimierungskriterium zugrunde gelegt werden, dass diese Zeit minimiert werden soll. Es kann auch vorgegeben sein, dass die Zeit nicht unbedingt minimiert sein muss, aber höchstens einen bestimmten Prozentsatz ausmachen soll. Dies kann sinnvoll sein, wenn weitere Optimierungskriterien, beispielsweise betreffend den zu nutzenden Straßentyp, ebenfalls berücksichtigt werden sollen.

Das Berücksichtigen eines Optimierungskriteriums weist den Vorteil auf, dass der Fahrer nicht selbst zwischen mehreren möglichen Fahrrouten auswählen muss, sondern die Auswahl automatisch auf Grundlage des Optimierungskriteriums erfolgen kann.

Die Erfindung sieht in einer weiteren Ausführungsform vor, dass durch das Navigationssystem eine Angabe zu einer spätesten Ankunftszeit von dem Benutzer empfangen wird, also der Benutzer eine solche Ankunftszeit beispielsweise eingibt, und dann aus den Navigationsdaten als die Fahrroute eine solche Fahrstrecke herausgesucht wird, die bei den gegebenen Verkehrsdaten ein vorgegebenes Optimierungskriterium betreffend die Zeit, die der Fahrer pilotiert fahren kann, erfüllt und hierbei auch die Vorgabe zur Ankunftszeit einhält. Beispielsweise kann es für einen Fahrer eines Kraftfahrzeugs mit Autopiloten sinnvoller sein, 50 Minuten vor der gewünschten Ankunftszeit loszufahren und dann 20 Minuten in zähfließendem Verkehr bei pilotierter Fahrt zu verbringen als erst 40 Minuten vor der gewünschten Ankunftszeit loszufahren und dann aber 40 Minuten lang selbst fahren zu müssen. Im ersten Fall hat der Fahrer insgesamt 20 Minuten Zeit, sich mit etwas anderem als dem Führen des Fahrzeugs zu beschäftigen, im zweiten Fall nur 10 Minuten, nämlich die 10 Minuten vor seiner Abreise. Dennoch kommt er in beiden Fällen zur gewünschten Ankunftszeit an.

Die Erfindung sieht in einer weiteren Ausführungsform vor, dass dem Benutzer durch das Navigationssystem zu der ermittelten Fahrroute vorhergesagt wird, wie oft und wie lange der Fahrer am Stück voraussichtlich pilotiert fahren kann. Hieran kann der Fahrer erkennen, ob er mehrmals nur kurze Zeit den Autopiloten aktivieren kann oder ob er beispielsweise für einen längeren Zeitraum durchgehend mit aktiviertem Autopiloten reisen kann. Gefällt dem Benutzer die ermittelte Fahrtroute nicht, weil er beispielsweise nur mehrere Male kurzzeitig die Aufmerksamkeit vom Verkehr abwenden, also pilotiert fahren kann, kann er diese ermittelte Fahrroute ablehnen und die Ermittlung einer alternativen Fahrroute anstoßen.

Die Entscheidung für eine bestimmte Fahrroute wird dem Benutzer des Navigationssystems besonders leicht bei einer Ausführungsform der Erfindung gemacht, bei der dem Benutzer durch das Navigationssystem zu der ermittelten Fahrroute vorhergesagt wird, wie weit er voraussichtlich einen bestimmten Text lesen oder einen bestimmten Film anschauen kann. Hierbei kann in dem Navigationssystem beispielsweise auch ein Parameter betreffend die Lesegeschwindigkeit des Benutzers hinterlegt sein. Dem Benutzer kann dann beispielsweise angezeigt werden: "Sie können den Film XY auf der Fahrt entlang der Fahrroute voraussichtlich zur Hälfte anschauen."

Die Erfindung sieht in einer anderen Ausführungsform eine Geschwindigkeitsempfehlung vor, die durch das Navigationssystem für eine Fahrstrecke vor einem auf der Fahrroute befindlichen Stau gegeben wird. Zusätzlich oder alternativ dazu kann auch eine voraussichtliche Ankunftszeit bei dem Stau ausgegeben werden. Dann kann der Fahrer gezielt beeinflussen, wann er pilotiert fährt, indem er nämlich die Fahrgeschwindigkeit anpasst. Durch eine entsprechend hohe Fahrgeschwindigkeit kann z.B. erreicht werden, dass eine pilotierte Fahrt möglichst bald beginnt.

Bevorzugt wird eine Geschwindigkeitsempfehlung in Abhängigkeit von einem Termin des Fahrers und/oder einem Optimierungskriterium, dass der Fahrer möglichst lang mit aktiviertem Autopiloten fahren können soll, erzeugt. Hat der Fahrer beispielsweise ein Telefonat für 14:00 Uhr geplant, kann das Navigationssystem durch entsprechende Geschwindigkeitsempfehlungen den Fahrer dabei unterstützen, dass der Fahrer bis dahin den Stau erreicht und die pilotierte Fahrt begonnen hat. Durch die Geschwindigkeitsempfehlung können auch solche Streckenabschnitte verkürzt werden, in denen der Fahrer selbst aktiv lenken muss.

Die Erfindung sieht in einer anderen Ausführungsform vor, dass durch das Navigationssystem in Abhängigkeit von dem Aktivierungszustand des Autopiloten eine Nachricht zum Benachrichtigen einer Person außerhalb des Kraftfahrzeugs erzeugt wird. Ist der Fahrer beispielsweise in einem sozialen Netzwerk aktiv und meldet gern persönliche Stati über zum Beispiel Facebook, so kann man dies unterstützen, indem man den Status des pilotierten Fahrens/assistierten Fahrens automatisch postet, zum Beispiel: "Lasse mich gerade vom Fahrzeug fahren und schaue einen Film." Aufgrund der Nachricht kann dann die benachrichtigte Person beispielsweise den Fahrer anrufen und weiß, dass der Fahrer hierdurch nicht vom Führen des Kraftfahrzeugs abgelenkt wird. Eine Nachricht kann deshalb beispielsweise auch lauten: "Du kannst mich jetzt anrufen!" oder "Ich nehme jetzt anrufe entgegen."

Die Erfindung sieht in einer Ausführungsform vor, durch das Navigationssystem von einem elektronischen Kalender des Fahrers Termindaten zu empfangen und die Fahrroute dahingehend festzulegen, dass der Autopilot voraussichtlich zu zumindest einem durch die Termindaten angegebenen Termin aktiviert ist. Dann ist zu diesem Termin der Fahrer nicht durch das Führen des Kraftfahrzeugs abgelenkt.

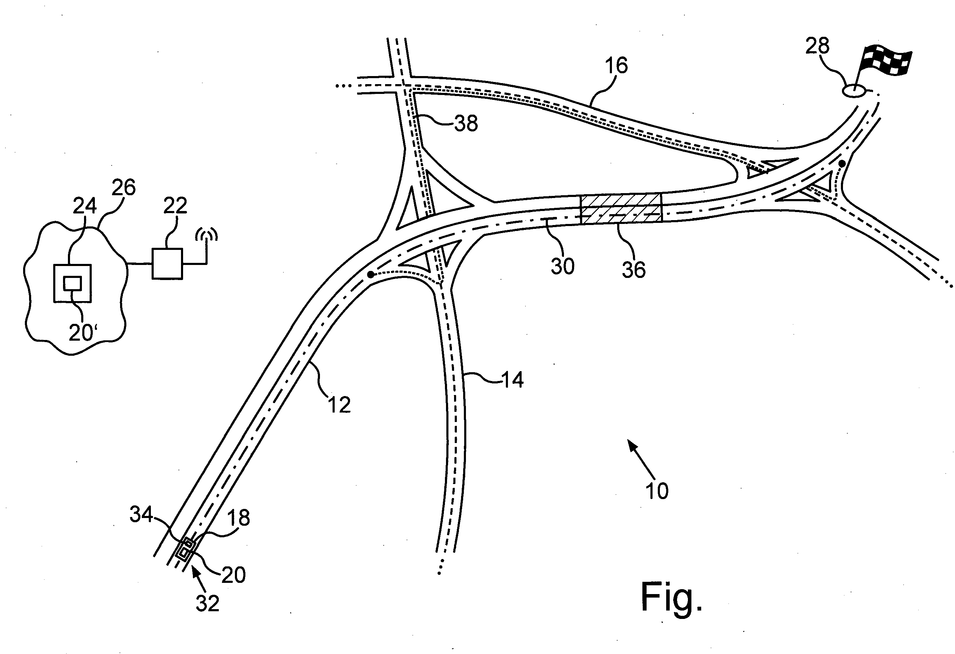

Im Folgenden ist die Erfindung noch einmal anhand eines konkreten Ausführungsbeispiels erläutert. Hierzu zeigt die einzige Figur (Fig.) beispielhaft eine schematische Darstellung eines Straßenverkehrsnetzes 10 mit einer Autobahn 12 und zwei Landstraßen 14, 16.

Bei dem im Folgenden erläuterten Ausführungsbeispiel stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der beschriebenen Merkmale der Erfindung ergänzbar.

In dem in der Fig. gezeigten Beispiel fährt ein Kraftfahrzeug 18 auf der Autobahn 12. Es kann sich hierbei um eine Ausführungsform des erfindungsgemäßen Kraftfahrzeugs handeln. Beispielsweise kann es sich bei dem Kraftfahrzeug um einen Kraftwagen, insbesondere um einen Personenkraftwagen, handeln. In dem Kraftfahrzeug 18 kann sich ein Navigationssystem 20 befinden. Zusätzlich oder alternativ dazu kann das Kraftfahrzeug 10 auch dazu ausgelegt sein, drahtlos, beispielsweise über eine Mobilfunkverbindung, über ein Kommunikationsnetzwerk 22, beispielsweise einem Mobilfunknetz, mit einer Serveranordnung 24 des Internets 26 zu kommunizieren. Die Serveranordnung 24 kann dann eine Navigationseinrichtung 20' aufweisen. Die Funktionalitäten, die durch das Navigationssystem 20 und das Navigationssystem 20' bereitgestellt werden, können dieselben sein. Im Folgenden ist deshalb angenommen, dass es sich bei dem Kraftfahrzeug 18 um eine Ausführungsform des erfindungsgemäßen Kraftfahrzeugs mit einem eigenen Navigationssystem 20 handelt.

Ein (nicht dargestellter) Fahrer des Kraftfahrzeugs 18 hat als Navigationsziel in dem Navigationssystem 20 einen Zielort 28 festgelegt. Das Navigationssystem 20 hat daraufhin eine Fahrroute 30 zu dem Zielort 28 ausgehend von einem Aufenthaltsort 32 des Kraftfahrzeugs 18 ermittelt. In dem gezeigten Beispiel kann es sich bei dem aktuellen Aufenthaltsort 32 um den Startpunkt der Fahrt des Kraftfahrzeugs 18 oder um eine aktuellen Position während einer Fahrt handeln. Im zweiten Fall handelt es sich bei der Routenplanung dann um eine dynamische Routenumplanung. Die Fahrroute 30 kann von dem Navigationssystem 20 auf der Grundlage von Navigationsdaten betreffend das Verkehrsnetz 10 ermittelt worden sein. Die Navigationsdaten können beispielsweise in einer Navigationsdatenbank des Navigationssystems 20 gespeichert sein. Das Kraftfahrzeug 18 kann zusätzlich aktuelle Verkehrsdaten betreffend den Verkehrsfluss im Straßenverkehrsnetz 10 empfangen.

Das Kraftfahrzeug 18 weist einen Autopiloten 34 auf, durch welchen das Kraftfahrzeug 18 selbsttätig geführt werden kann. Durch den Autopiloten 34 kann also die Längs- und Querführung des Kraftfahrzeugs 18 unabhängig von dem Fahrer durchgeführt werden, wenn der Autopilot 34 aktiviert ist. Im deaktivierten Zustand des Autopiloten 34 muss der Fahrer zumindest die Querführung des Kraftfahrzeugs 18 selbst durchführen.

Das Navigationssystem 20 berücksichtigt bei der Routenplanung den Autopiloten 34: Durch das Navigationssystem 20 wird auf der Grundlage der aktuellen Verkehrsdaten überprüft, wo im Verkehrsnetz 10 eine Aktivierungsbedingung für den Autopiloten 34 erfüllt ist, wo beispielsweise der Verkehrsfluss eine derart geringe Fahrgeschwindigkeit aufweist, dass das Kraftfahrzeug 18 durch den Autopiloten 34 geführt werden kann. In dem gezeigten Beispiel wird durch die Verkehrsdaten angezeigt, dass es einen Stau 36 auf der Autobahn 12 gibt, in welchem die Aktivierungsbedingung erfüllt ist, das heißt das Kraftfahrzeug 18 pilotiert durch den Autopiloten 34 gefahren werden kann. Die pilotierte Fahrt durch den Stau 36 würde aber die Gesamtreisezeit zu dem Zielort 28 verlängern. Das Navigationssystem 20 berechnet deshalb eine Alternativroute 38, die in dem gezeigten Beispiel über die beiden Landstraßen 14, 16 führt. Durch das Navigationssystem 20 wird überprüft, wie lang die Fahrt auf der ursprünglich geplanten Fahrroute 30 voraussichtlich dauern wird, wenn der Stau 36 durchfahren wird. Hierbei wird durch das Navigationssystem 20 aber berücksichtigt, dass der Fahrer während des Aufenthalts im Stau 36 das Kraftfahrzeug 18 nicht selbst führen muss, sondern sich beispielsweise mit dem Lesen von E-Mails oder dem Anschauen eines Filmes beschäftigen kann. Zu der Alternativroute 38 wird ebenfalls ermittelt, wie lange der Fahrer ausgehend vom aktuellen Aufenthaltsort 32 braucht, um den Zielort 28 zu erreichen. Hierbei wird berücksichtigt, dass der Fahrer das Kraftfahrzeug 18 auf der Alternativroute 38 die ganze Zeit selbst führen muss. Beispielsweise kann durch das Navigationssystem 20 ermittelt werden, dass die Fahrt auf der ursprünglich geplanten Fahrroute 30 insgesamt 50 Minuten dauert, während sie auf der alternativen Route 38 nur 40 Minuten dauert. Der Fahrer wäre also 10 Minuten früher am Ziel. Damit müsste nach herkömmlichen Bewertungsregeln das Navigationssystem 20 die Routenumplanung durchführen und das Kraftfahrzeug 18 entlang der Alternativroute 38 navigieren, d.h. dem Fahrer Navigationshinweise für diese Route geben.

Durch das Navigationssystem 20 wird aber auch ermittelt, dass die Aufenthaltszeit im Stau 36 voraussichtlich 20 Minuten beträgt. Der Fahrer kommt also am Zielort 28 zwar 10 Minuten später an, hat aber dann schon 20 Minuten bei pilotierter Fahrt im Stau etwas anderes erledigen können, wie beispielsweise das Lesen der E-Mails. Dies wird von dem Navigationssystem 20 als Zeitgewinn für den Fahrer bei der Entscheidung zwischen der ursprünglichen Fahrroute 30 und der Alternativroute 38 gewertet. Deshalb behält das Navigationssystem 20 den ursprünglichen Fahrkurs bei, das heißt es ändert die Fahrroute nicht und führt den Fahrer entlang der Fahrroute 30 in den Stau 36. Dort kann der Fahrer dann gefahrlos den Autopiloten aktivieren und sich einer anderen Beschäftigung als dem Führen des Kraftfahrzeugs 18 widmen.

Das Navigationssystem 20 und entsprechend auch das Navigationssystem 20' können noch weitere Funktionalitäten aufweisen. Diese sind im Folgenden beispielhaft zusammengefasst:
Bei der Planung der Route kann die Möglichkeit zum pilotierten Fahrenlassen bereits berücksichtigt werden. So kann zum Beispiel nach der Zeit optimiert werden, die der Fahrer selbst fahren muss. Man kann auch eine späteste Ankunftszeit vorgeben und nach der Zeit optimieren, die der Fahrer pilotiert fahren kann. Bei der dynamischen Routenumplanung kann ebenfalls danach optimiert werden, wie viel Zeit der Fahrer durch das pilotierte Fahren an Zeit/Arbeitszeit gewinnt. Dem Fahrer kann man die geplante Route unter Berücksichtigung der pilotierten/nicht-pilotierten Phasen grafisch aufbereitet darbieten; gerade für technikverliebte und verspielte Kundschaft kann das von großem Interesse sein. Anhand der grafischen Aufbereitung kann auch entschieden werden, ob es sich bei den pilotierten Phasen um gestückelte, verhältnismäßig kurze Zeitabschnitte oder um verhältnismäßig lange Phasen handelt. Entsprechend kann sich der Fahrer dann für die Fahrt vorbereiten, also beispielsweise sich ein Buch zurecht legen oder das Lesen von E-Mails einplanen. Dem Fahrer kann auch vorhergesagt werden, wie viel Zeit er am Stück voraussichtlich pilotiert fahren kann. Danach kann er entscheiden, ob es sich lohnt, einen Film anzufangen oder doch nur eine kurze E-Mail zu schreiben. Diese Information kann man ihm auch so weit aufbereiten, dass er vorhergesagt bekommt, wie weit er einen Text lesen oder einen Film anschauen kann im Verhältnis zum jeweiligen Gesamtwerk (Buch oder Film). Einen Stau kann man in unterschiedliche Typen einteilen (z.B. stehend, fließend, stockend). Mit einer Vorhersage zum Typ lässt sich dem Fahrer gegenüber auch eine Empfehlung für eine Nebentätigkeit aussprechen. Aus den voraussichtlichen Staudaten entlang einer Strecke kann man dem Fahrer auch eine Geschwindigkeitsempfehlung für die Strecke vor dem Stau geben: Er kann somit entscheiden, ab wann er pilotiert fährt und Zeit für eine bestimmte E-Mail/ein Videotelefonat hat. Er kann entscheiden, ob er so fahren möchte, dass er möglichst lange im pilotierten Modus fahren kann. Ist der Fahrer in sozialen Netzwerken aktiv, so kann man dies unterstützen, indem man den Status des pilotierten Fahrens automatisch postet.

Zur Realisierung der Funktionalitäten des erfindungsgemäßen Navigationssystems 20 beziehungsweise 20' kann für die Routenberechnung auf den an sich bekannten Star-Algorithmus zurückgegriffen werden, der bestimmte Optimierungen (kürzeste Fahrstrecke, schnellste Fahrstrecke anhand von Navigationsdaten) über Kosten/Erträge von Teilstrecken ermittelt. Mit Hilfe von aktuellen Staumeldungen und vorhergesagten Staus, oder allgemein Verkehrsdaten, kann man auch Kosten und Erträge für das pilotierte/nicht-pilotierte Fahren vergeben. So können diese neuen Eigenschaften eines Kraftfahrzeugs bei der Routenplanung berücksichtigt werden. Verkehrsdaten können beispielsweise aus Datenquellen wie "Google Live Traffic/Traffic Forecast" entnommen werden. Ebenfalls aus diesen Daten lassen sich Vorhersagen für den aktuellen Stau und die voraussichtliche Nutzungsdauer des Autopiloten ableiten. Im Zusammenhang mit der Nutzung eines Autopiloten in Staufahrten wird ein Autopilot auch als Staupilot bezeichnet.

## Patentansprüche

1. Verfahren zum Betreiben eines Navigationssystems (20, 20') für ein Kraftfahrzeug (18) mit Autopiloten (34), wobei der Autopilot (34) dazu ausgelegt ist, im aktivierten Zustand während einer pilotierten Fahrt ohne ein Zutun eines Fahrers selbsttätig eine Längs- und Querführung des Kraftfahrzeugs (18) durchzuführen und wobei bei dem Verfahren durch das Navigationssystem (20, 20') zu einer Zielvorgabe (28) auf der Grundlage von Navigationsdaten eine Fahrroute (30) zu dem Ziel (28) hin ermittelt wird, wobei durch das Navigationssystem (20, 20') anhand von Verkehrsdaten und auf Grundlage einer vorbestimmten Aktivierungsbedingung für den Autopiloten (34) ermittelt wird, auf welchen Straßen (12, 14, 16), die durch die Navigationsdaten beschrieben sind, das Aktivieren des Autopiloten (34) voraussichtlich möglich ist,
**dadurch gekennzeichnet, dass**
durch das Navigationssystem (20, 20') ein durch die Verkehrsdaten beschriebener Stau (36) auf der ermittelten Fahrroute (30) einem aus mehreren unterschiedlichen Stautypen zugeordnet wird und dem Fahrer zu dem Stau (36) eine Empfehlung für eine Nebentätigkeit während einer pilotierten Fahrt in dem Stau gemäß dem Stautyp gegeben wird, und bei einer dynamischen Routenumplanung während der Fahrt des Kraftfahrzeugs aus mehreren möglichen Alternativrouten (30, 38) diejenige herausgesucht wird, durch die der Fahrer durch pilotiertes Fahren die meiste frei verfügbare Zeit während der Fahrt und/oder während eines vorbestimmten Zeitraums gewinnt.

2. Verfahren nach Anspruch 1, wobei die Fahrroute (30) in Abhängigkeit von einer Vorgabe des Fahrers betreffend das Fahren mit aktiviertem Autopiloten (34) ermittelt wird.

3. Verfahren nach einem der vorhergehenden Ansprüche, wobei zu der ermittelten Fahrroute (30) für einen Benutzer des Navigationssystems (20, 20') eine Einteilung der Fahrroute (30) in pilotierte und nicht-pilotierte Abschnitte ausgegeben wird.

4. Verfahren nach einem der vorhergehenden Ansprüche, wobei durch das Navigationssystem (20, 20') aus den Navigationsdaten als die Fahrroute eine Fahrstrecke herausgesucht wird, die bei den gegebenen Verkehrsdaten ein vorgegebenes Optimierungskriterium betreffend eine Zeit, die der Fahrer selbst fahren muss, erfüllt.

5. Verfahren nach einem der vorhergehenden Ansprüche, wobei durch das Navigationssystem (20, 20') eine Angabe zu einer spätesten Ankunftszeit von dem Benutzer empfangen wird und aus den Navigationsdaten als die Fahrroute (30) eine Fahrstrecke herausgesucht wird, die bei den gegebenen Verkehrsdaten ein vorgegebenes Optimierungskriterium betreffend eine Zeit, die der Fahrer pilotiert fahren kann, erfüllt und hierbei die Ankunftszeit einhält.

6. Verfahren nach einem der vorhergehenden Ansprüche, wobei dem Benutzer durch das Navigationssystem (20, 20') zu der ermittelten Fahrroute (30) vorhergesagt wird, wie viel Zeit der Fahrer am Stück voraussichtlich pilotiert fahren kann.

7. Verfahren nach einem der vorhergehenden Ansprüche, wobei dem Benutzer durch das Navigationssystem (20, 20') zu der ermittelten Fahrroute (30) vorhergesagt wird, wie weit er voraussichtlich einen bestimmten Text lesen oder einen bestimmten Film anschauen kann.

8. Verfahren nach einem der vorhergehenden Ansprüche, wobei eine geplante Fahrroute unter Berücksichtigung pilotierter und nicht pilotierter Phasen grafisch aufbereitet wird, sodass anhand der grafischen Aufbereitung entschieden werden kann, ob es sich bei den pilotierten Phasen um gestückelte, verhältnismäßig kurze Zeitabschnitte oder um verhältnismäßig lange Zeitabschnitte handelt.

9. Verfahren nach einem der vorhergehenden Ansprüche, wobei durch das Navigationssystem (20, 20') eine Geschwindigkeitsempfehlung für eine Fahrstrecke vor einem auf der Fahrroute (30) befindlichen Stau (36) oder eine voraussichtliche Ankunftszeit bei dem Stau (36) ausgegeben wird.

10. Verfahren nach Anspruch 9, wobei die Geschwindigkeitsempfehlung in Abhängigkeit von einem Termin des Fahrer und/oder einem Optimierungskriterium, dass der Fahrer möglichst lang mit aktiviertem Autopiloten (34) fahren können soll, erzeugt wird.

11. Verfahren nach einem der vorhergehenden Ansprüche, wobei durch das Navigationssystem (20, 20') in Abhängigkeit von dem Aktivierungszustand des Autopiloten (34) eine Nachricht zum Benachrichtigen einer Person außerhalb des Kraftfahrzeugs (18) erzeugt wird, wobei in einem sozialen Netzwerk ein Status des pilotierten Fahrens automatisch gepostet wird.

12. Verfahren nach einem der vorhergehenden Ansprüche, wobei durch das Navigationssystem (20, 20') von einem elektronischen Kalender des Fahrers Termindaten empfangen werden und die Fahrroute (30) dahingehend festgelegt wird, dass der Autopilot (34) voraussichtlich zu zumindest einem durch die Termindaten angegebenen Termin aktiviert ist.

13. Kraftfahrzeug (18) mit einem Autopiloten (34) und einem Navigationssystem (20), wobei der Autopilot (34) dazu ausgelegt ist, im aktivierten Zustand während einer Fahrt ohne ein Zutun eines Fahrers selbsttätig eine Längs- und Querführung des Kraftfahrzeugs (18) durchzuführen, und wobei das Navigationssystem (20) dazu ausgelegt ist, zu einer Zielvorgabe (28) des Fahrers auf der Grundlage von Navigationsdaten eine Fahrroute (30) zu dem Ziel (28) zu ermitteln,
**dadurch gekennzeichnet, dass**
das Navigationssystem (20) dazu ausgelegt ist, ein Verfahren nach einem der vorhergehenden Ansprüche durchzuführen.

14. Serveranordnung (24) für das Internet (26), welche ein Navigationssystem (20') aufweist, das dazu ausgelegt ist, zu einer Zielvorgabe (28) eines Fahrers eines Kraftfahrzeugs (18) auf der Grundlage von Navigationsdaten eine Fahrroute (30) zu dem Ziel (28) zu ermitteln und die ermittelte Fahrroute (30) an das Kraftfahrzeug (18) zu übermitteln,
**dadurch gekennzeichnet, dass**
das Navigationssystem (20') dazu ausgelegt ist, ein Verfahren nach einem der Ansprüche 1 bis 12 durchzuführen.

## Claims

1. Method for operating a navigation system (20, 20') for a motor vehicle (18) with autopilot (34), wherein the autopilot (34) is designed to automatically carry out longitudinal and lateral guidance of the motor vehicle (18) in the activated state during a piloted journey without assistance from a driver and wherein, in the method, the navigation system (20, 20') determines, for a prescribed destination (28), a route (30) to the destination (28) on the basis of navigation data, wherein the navigation system (20, 20'), using traffic data and on the basis of a predetermined activation condition for the autopilot (34), determines the roads (12, 14, 16) described by the navigation data, on which the activation of the autopilot (34) is likely to be possible, **characterised in that** the navigation system (20, 20') assigns a traffic jam (36) on the determined route (30) described by the traffic data to one of a plurality of different traffic jam types and, with regard to the traffic jam (36), gives the driver a recommendation for a secondary activity during a piloted journey in the traffic jam according to the traffic jam type, and in dynamic rerouting during the journey of the motor vehicle picks out from a plurality of possible alternative routes (30, 38) the one, by means of which the driver, by means of piloted driving, will gain the most freely disposable time during the journey and/or during a predetermined period of time.

2. Method according to claim 1, wherein the route (30) is determined depending on an input of the driver relating to driving with activated autopilot (34).

3. Method according to any one of the preceding claims, wherein, for the determined route (30), a division of the route (30) into piloted and non-piloted sections is issued for a user of the navigation system (20, 20').

4. Method according to any one of the preceding claims, wherein the navigation system (20, 20') picks out from the navigation data as the route a way, which, with the given traffic data, satisfies a predefined optimisation criterion relating to a time that the driver must drive himself.

5. Method according to any one of the preceding claims, wherein the navigation system (20, 20') receives from the user an indication of a latest time of arrival and picks out from the navigation data as the route (30) a way, which, with the given traffic data, satisfies a predefined optimisation criterion relating to a time that the driver can drive piloted and hereby complies with the arrival time.

6. Method according to any one of the preceding claims, wherein, for the determined route (30), the navigation system (20, 20') predicts for the user, how much time the driver can likely drive piloted without interruption.

7. Method according to any one of the preceding claims, wherein, for the determined route (30), the navigation system (20, 20') predicts for the user, how far he can likely read a certain text or watch a certain film.

8. Method according to any one of the preceding claims, wherein a planned route, taking into account piloted and non-piloted phases, is prepared graphically, such that with the help of the graphic preparation it can be decided, whether the piloted phases are fragmented, relatively short time periods or relatively long time periods.

9. Method according to any one of the preceding claims, wherein the navigation system (20, 20') issues a speed recommendation for a way before traffic jam (36) on the route (30) or a probable time of arrival in view of the traffic jam (36).

10. Method according to claim 9, wherein the speed recommendation is generated depending on a time scheduled by the driver and/or an optimisation criterion, that the driver is to be able to drive as long as possible with activated autopilot (34).

11. Method according to any one of the preceding claims, wherein, depending on the activation state of the autopilot (34), the navigation system (20, 20') generates a message to inform a person outside the motor vehicle (18), wherein a status of the piloted driving is posted automatically in a social network.

12. Method according to any one of the preceding claims, wherein the navigation system (20, 20') receives schedule data from an electronic calendar of the driver and sets the route (30), such that the autopilot (34) is likely activated at at least one scheduled time indicated by the schedule data.

13. Motor vehicle (18) having an autopilot (34) and a navigation system (20), wherein the autopilot (34) is designed to automatically carry out longitudinal and lateral guidance of the motor vehicle (18) in the activated state during a journey without assistance from a driver, and wherein the navigation system (20) is designed to determine, for a destination (28) prescribed by the driver, a route (30) to the destination (28) on the basis of navigation data, **characterised in that** the navigation system (20) is designed to carry out a method according to any one of the preceding claims.

14. Server arrangement (24) for the Internet (26), having a navigation system (20') that is designed to determine, for a destination (28) prescribed by the driver of a motor vehicle (18), a route (30) to the destination (28) on the basis of navigation data and to convey the determined route (30) to the motor vehicle (18), **characterised in that** the navigation system (20') is designed to carry out a method according to any one of claims 1 to 12.

## Revendications

1. Procédé permettant de faire fonctionner un système de navigation (20, 20') pour un véhicule automobile (18) avec un pilotage automatique (34), dans lequel le pilotage automatique (34) est conçu afin de réaliser automatiquement un guidage longitudinal et transversal du véhicule automobile (18) dans l'état activé pendant un trajet piloté sans intervention d'un conducteur et dans lequel un itinéraire (30) vers la destination (28) est déterminé lors du déplacement par le système de navigation (20, 20') vers une destination (28) prescrite sur la base de données de navigation, dans lequel il est déterminé par le système de navigation (20, 20') au moyen de données de circulation et sur la base d'une condition d'activation prédéterminée pour le pilotage automatique (34), sur quelles routes (12, 14, 16) qui sont décrites par les données de navigation, l'activation du pilotage automatique (34) est probablement possible,
**caractérisé en ce que**
par le système de navigation (20, 20') un embouteillage (36) décrit par les données de circulation est associé sur l'itinéraire (30) déterminé à un des plusieurs types d'embouteillage différents et une recommandation pour une activité accessoire est donnée pendant un trajet piloté dans l'embouteillage selon le type d'embouteillage au conducteur pour l'embouteillage (36), et
en cas de replanification d'itinéraire dynamique pendant le trajet du véhicule automobile il est choisi parmi plusieurs itinéraires (30, 38) alternatifs possibles celui par lequel le conducteur obtient par le trajet piloté le temps le plus librement disponible pendant le trajet et/ou pendant une période prédéterminée.

2. Procédé selon la revendication 1, dans lequel l'itinéraire (30) est déterminé en fonction d'une prescription du conducteur concernant le trajet avec un pilotage automatique (34) activé.

3. Procédé selon l'une quelconque des revendications précédentes, dans lequel une classification de l'itinéraire (30) en sections pilotées et non pilotées est émise pour l'itinéraire (30) déterminé pour un utilisateur du système de navigation (20, 20').

4. Procédé selon l'une quelconque des revendications précédentes, dans lequel il est choisi par le système de navigation (20, 20') parmi les données de navigation en tant qu'itinéraire un trajet qui remplit pour les données de circulation données un critère d'optimisation prescrit concernant un temps pendant lequel doit rouler le conducteur lui-même.

5. Procédé selon l'une quelconque des revendications précédentes, dans lequel par le système de navigation (20, 20') une indication d'un temps d'arrivée le plus tard est reçue par l'utilisateur et il est choisi parmi les données de navigation en tant qu'itinéraire (30) un trajet qui remplit pour les données de circulation données un critère d'optimisation prescrit concernant un temps pendant lequel le conducteur peut rouler de manière pilotée et respecte ici le temps d'arrivée.

6. Procédé selon l'une quelconque des revendications précédentes, dans lequel il est prédit à l'utilisateur par le système de navigation (20, 20') pour l'itinéraire (30) déterminé combien de temps le conducteur peut probablement rouler d'affilée de manière pilotée.

7. Procédé selon l'une quelconque des revendications précédentes, dans lequel il est prédit à l'utilisateur par le système de navigation (20, 20') pour l'itinéraire (30) déterminé dans quelle mesure il peut probablement lire un texte déterminé ou regarder un film déterminé.

8. Procédé selon l'une quelconque des revendications précédentes, dans lequel un itinéraire planifié est préparé graphiquement en tenant compte de phases pilotées et non pilotées de sorte qu'au moyen de la préparation graphique il peut être décidé s'il s'agit pour les phases pilotées de sections de temps fragmentées, relativement courtes ou de sections de temps relativement longues.

9. Procédé selon l'une quelconque des revendications précédentes, dans lequel par le système de navigation (20, 20') une recommandation de vitesse pour un trajet est émise avant un embouteillage (36) se trouvant sur l'itinéraire (30) ou un temps d'arrivée probable au niveau de l'embouteillage (36).

10. Procédé selon la revendication 9, dans lequel la recommandation de vitesse est générée en fonction d'un délai du conducteur et/ou d'un critère d'optimisation selon lequel le conducteur doit pouvoir rouler le plus longtemps possible avec un pilotage automatique activé (34).

11. Procédé selon l'une quelconque des revendications précédentes, dans lequel par le système de navigation (20, 20') en fonction de l'état d'activation du pilotage automatique (34) un message est généré pour informer une personne à l'extérieur du véhicule automobile (18), dans lequel un statut de la conduite pilotée est automatiquement posté dans un réseau social.

12. Procédé selon l'une quelconque des revendications précédentes, dans lequel par le système de navigation (20, 20') des données de délai sont reçues par un calendrier électronique du conducteur et l'itinéraire (30) est déterminé en ce sens que le pilotage automatique (34) est probablement activé dans au moins un délai indiqué par les données de délai.

13. Véhicule automobile (18) avec un pilotage automatique (34) et un système de navigation (20), dans lequel le pilotage automatique (34) est conçu afin de réaliser automatiquement un guidage longitudinal et transversal du véhicule automobile (18) dans l'état activé pendant un trajet sans intervention d'un conducteur, et dans lequel le système de navigation (20) est conçu afin de déterminer un itinéraire (30) vers la destination (28) pour une destination (28) prescrite du conducteur sur la base de données de navigation,
**caractérisé en ce que**
le système de navigation (20) est conçu afin de réaliser un procédé selon l'une quelconque des revendications précédentes.

14. Agencement de serveur (24) pour l'Internet (26) qui présente un système de navigation (20') qui est conçu afin de déterminer pour une destination (28) prescrite d'un conducteur d'un véhicule automobile (18) sur la base de données de navigation un itinéraire (30) vers la destination (28) et de transmettre l'itinéraire (30) déterminé au véhicule automobile (18),
**caractérisé en ce que**
le système de navigation (20') est conçu afin de réaliser un procédé selon l'une quelconque des revendications 1 à 12.
